# EUROPEAN PATENT SPECIFICATION

(11) **EP 3 059 024 B1**
(45) Date of publication and mention of the grant of the patent: **19.07.2023**
(21) Application number: 16155878.8
(22) Date of filing: 16.02.2016
(51) Int. Cl.: B21D 22/16, B21D 33/00, G03G 15/20

(54) **FIXING SLEEVE AND MANUFACTURING METHOD THEREOF**
FIXIERHÜLSE UND HERSTELLUNGSVERFAHREN DAFÜR
MANCHON DE FIXAGE ET SON PROCÉDÉ DE FABRICATION

(30) Priority: 17.02.2015 JP 2015028515
(43) Date of publication of application: 24.08.2016
(73) Proprietor: K.K. Endo Seisakusho, Niigata-ken 959-1289 (JP)
(72) Inventor: KOBAYASHI, Tsuyoshi, Niigata 959-1289 (JP); SAITO, Tsuyoshi, Niigata 959-1289 (JP); YAOITA, Takashi, Niigata 959-1289 (JP); MARUYAMA, Katsutoshi, Niigata 959-1289 (JP)
(74) Representative: Becker Kurig & Partner Patentanwälte mbB

(56) References cited:
- EP-A2- 1 424 147
- DE-A1- 2 941 160
- JP-A- S60 263 671
- US-A- 4 118 846
- US-A1- 2003 035 667
- Anonymous: "Zylinder-Dr?ckwalzen" In: "Dr?cken und Dr?ckwalzen: Umformtechnik, Werkst?ckgestaltung, Maschinen, Steuerungskonzepte", 1 January 1993 (1993-01-01), XP055398557, ISBN: 978-3-478-93086-4 pages 51-61,
- Anonymous: "Fertigungsverfahren (passage)" In: "Fertigungsverfahren 4 Umformen, 5. Auflage", 1 January 2006 (2006-01-01), Springer, XP055398562, page 393,

## Description

### [Field of the Invention]

The present invention relates to a thin-wall metal tubular body and a manufacturing method thereof, and more particularly to a fixing sleeve for fixing a toner to paper by applying heat and pressure in a laser printer or copier, and also to a method for manufacturing the fixing sleeve.

### [Description of the Related Art]

The fixing system of laser printers and copiers has been changed from the conventional roller fixing system to a film fixing system. With the conventional roller fixing system, a heater located inside the roller needs to be actuated even in the printing standby mode in order to warm up the roller. By contrast, with the thin fixing sleeve having a high thermal conduction efficiency and a low thermal capacity, the heater is actuated only when the fixing sleeve rotates. Therefore, power can be saved and the standby time can be shortened. A metal such as stainless steel or a resin such as a polyimide is used as the thin-wall tubular body serving as a base layer of the fixing sleeve. However, from the standpoint of saving power and shortening the standby time, it is preferred that a metal of a high strength and excellent thermal conductivity be used.

During the fixing, it is necessary that a cylindrical fixing sleeve rotate while deforming in the circumferential direction, a heating heater constituting a fixing nip portion come into contact with the inner circumferential surface of the fixing sleeve, and the heat of the heating heater be transferred to the fixing nip portion. Therefore, thermal efficiency is strongly affected by the surface roughness of the inner circumferential surface of the fixing sleeve, and where the thermal efficiency is degraded, fixing defects occur. A method has been suggested for forming a film with a low friction resistance, for example from a fluororesin, on the inner circumferential surface of a fixing sleeve, but such a method raises the production cost and degrades the thermal efficiency due to the increase in the film thickness.

A fixing sleeve needs circumferential flexibility and durability to withstand deformation. Where a metal tubular body is used as the base layer of the fixing sleeve, it is manufactured to have a very small thickness of 20 µm to 50 µm. A spinning process is well known as a method for manufacturing such ultrathin metal tubular bodies (see Patent Literature 1).

However, with the spinning process disclosed in Patent Literature 1, since a mandrel is fitted on the inner circumferential surface of a cylindrical metal tubular body and a roller is pressed against the outer circumferential surface of the metal tubular body, fine protrusions and depressions present on the outer circumferential surface of the mandrel are transferred to the inner circumferential surface of the metal tubular body and the resultant surface seems matted to the naked eye. Further, roller marks formed during the spinning process remain on the inner circumferential surface of the cylindrical metal tubular body, and unevenness with a pitch of 0.1 mm to 0.5 mm and an amplitude of 0.2 µm to 3.0 µm remains thereon.
[Patent Literature 1] Japanese Patent No. 4133263.

EP 1424147 A2, on which the preamble of claim 1 is based, discloses a circular-shaped metal structure fabricated by plastic-working and having a wall thickness in the range of 0.03 mm to 0.09 mm both inclusive. A film composed of one of silicon and fluorocarbon resin and copper is coated on a surface of the circular-shaped metal structure.

JP S60263671 A discloses jetting an internal surface of a pipe, by directing a blast material with air from a nozzle by the air attracting action of an air suction device to remove residuals from the pipe.

### SUMMARY

It is an objective of the present invention to provide a fixing sleeve that makes it possible to process the inner circumferential surface of a cup-shaped tubular body or fixing sleeve during a spinning process into a smooth surface, thereby processing the fixing sleeve having an optimum outer surface, and also to a method for manufacturing such a fixing sleeve.

Another objective of the present invention is to provide a fixing sleeve that makes it possible to reduce the surface roughness of the inner circumferential surface of the fixing sleeve by a spinning process, and also to a method for manufacturing such a fixing sleeve.

The above mentioned problems are resolved with a method according to the features of claim 1.

The following disclosure serves a better understanding of the present invention. A method for manufacturing a fixing sleeve according to an aspect not belonging to the invention is method wherein the smooth surface is obtained by making the outer circumferential surface of the mandrel during the spinning process become a smooth surface with a small surface roughness and transferring the smooth surface of the outer circumferential surface of the mandrel onto the inner circumferential surface of the cup-shaped tubular body, thereby mirror finishing the inner circumferential surface of the fixing sleeve which has been reduced in the wall thickness.

A method for manufacturing a fixing sleeve according to another aspect not belonging to the invention is a method wherein
the cup-shaped tubular body is provided with a satin finished surface by polishing the inner circumferential surface of the cup-shaped tubular body produced by drawing a metal plate, in order to obtain the smooth surface, and
the spinning process is performed by fitting the mandrel on the inner circumferential surface of the metal cup-shaped tubular body and pressing the roller against the outer circumferential surface of the cup-shaped tubular body, thereby elongating the cup-shaped tubular body in the axial direction and reducing the wall thickness of the cup-shaped tubular body.

### BRIEF DESCRIPTION OF THE DRAWINGS

FIGs. 1A and 1B illustrate the method for manufacturing a cup-shaped tubular body, FIG. 1A being a vertical sectional view illustrating a step of molding a cup-shaped tubular body by deep drawing, and FIG. 1B being a perspective view illustrating the molded cup-shaped tubular body;
FIGs. 2A and 2B illustrate steps performed after the step illustrated by FIGs. 1A and 1B, FIG. 2A being an explanatory drawing illustrating a step of performing a spinning process to the cup-shaped tubular body depicted in FIG. 1B by using a mandrel according to the first embodiment of the present invention, and FIG. 2B being an explanatory drawing illustrating a step of molding a tubular fixing sleeve by cutting out both ends of the cup-shaped tubular body after the spinning process;
FIGs. 3A and 3B show the enlarged cross-sectional view of the P portion in FIG. 2A, FIG. 3A showing the enlarged cross-sectional view of the P portion illustrating the spinning process performed with the conventional mandrel, and FIG. 3B showing the enlarged cross-sectional view of the P portion illustrating the spinning process performed with the mandrel of the first embodiment of the present invention;
FIGs. 4A-4D show data obtained by measuring the surface roughness of the inner circumferential surface of the fixing sleeve processed by the spinning process with the conventional mandrel;
FIGs. 5A-5D show data obtained by measuring the surface roughness of the inner circumferential surface of the fixing sleeve processed by the spinning process with the mandrel;
FIGs. 6A and 6B illustrate the method for manufacturing a fixing sleeve according to the present invention, FIG. 6A being an explanatory drawing illustrating the step of removing the roller marks simultaneously with the spinning process, and FIG. 6B being an enlarged cross-sectional view of the Q portion depicted in FIG. 6A;
FIG. 7 is an explanatory drawing illustrating a variation example of the method for manufacturing a fixing sleeve, which does not belong to the present invention, the drawing depicting a step of removing the roller marks separately from the spinning process;
FIGs. 8A-8D illustrate data obtained by measuring the surface roughness of the inner circumferential surface of the fixing sleeve subjected to the roller mark removal process;
FIGs. 9A-9D illustrate data obtained by measuring the surface roughness of the inner circumferential surface of the fixing sleeve when the spinning process with the mandrel was combined with the roller mark removal process;
FIG. 10 is an explanatory drawing illustrating a method for manufacturing a fixing sleeve, not belonging to the present invention, the drawing depicting a step of sandblasting the inner circumferential surface of the cup-shaped tubular body molded by deep drawing;
FIGs. 11A and 11B illustrate data obtained by measuring the surface roughness of the inner circumferential surface of the fixing sleeve processed by spinning process with the conventional mandrel after performing the sandblasting
FIG. 12 is an explanatory drawing illustrating the inner surface polishing device of a negative-pressure suction type, this figure illustrating the method for manufacturing a fixing sleeve according to a preferred embodiment of the present invention; the inner surface polishing device polishes the inner circumferential surface of the fixing sleeve processed by spinning process with the conventional mandrel;
FIGs. 13A and 13B are explanatory drawings illustrating the locations for measuring the surface roughness of the inner circumferential surface of the fixing sleeve polished with the inner surface polishing device depicted in FIG. 12, FIG. 13A being a vertical sectional view of the fixing sleeve, and FIG. 13B being a right-side view of the fixing sleeve depicted in FIG. 13A;
FIG. 14 is a table obtained by measuring the surface roughness of the inner circumferential surface of the fixing sleeve subjected to the inner surface polishing; the results in the table were measured after polishing under the Abrasive Condition 1 to Abrasive Condition 8;
FIG. 15 shows data obtained by measuring the surface roughness under the Abrasive Condition 1 and Abrasive Condition 2 depicted in FIG. 14; those data were obtained by measuring the axial surface roughness at the end portion (b) and end portion (a) of the measurement location NO. 1;
FIG. 16 shows data obtained by measuring the surface roughness under the Abrasive Condition 3 and Abrasive Condition 4 depicted in FIG. 14; those data were obtained by measuring the axial surface roughness at the end portion (b) and end portion (a) of the measurement location NO. 1;
FIG. 17 shows data obtained by measuring the surface roughness under the Abrasive Condition 5 and Abrasive Condition 6 depicted in FIG. 14; those data were obtained by measuring the axial surface roughness at the end portion (b) and end portion (a) of the measurement location NO. 1;
FIG. 18 shows data obtained by measuring the surface roughness under the Abrasive Condition 7 and Abrasive Condition 8 depicted in FIG. 14; those data were obtained by measuring the axial surface roughness at the end portion (b) and end portion (a) of the measurement location NO. 1;
FIG. 19 is a microphotograph of the metal surface polished under the Abrasive Condition 1 to Abrasive Condition 8 depicted in FIG. 14, and FIG. 19 (a) to FIG. 19 (h) are eight microphotographs (the original color is violet) are the usual microphotographs presented for reference; FIG. 14, and FIG. 19 (p) to FIG. 19 (w) eight microphotographs (the original color is yellow) illustrate the height (depth) of protrusions and depressions of a contour curve; light gray portions represent low portions and dark gray portions represent high portions; and
FIG. 20A is a table in which the Abrasive Conditions 1 to 8 shown in the table in FIG. 14 are arranged in the order of increasing value of the maximum valley depth (Rv), and FIG. 20B is a table in which the Abrasive Conditions 1 to 8 shown in the table in FIG. 14 are arranged in the order of decreasing value of the initial wear height (Rpk).

### DESCRIPTION OF THE PREFERRED EMBODIMENTS

### [First embodiment of the method for manufacturing a fixing sleeve]

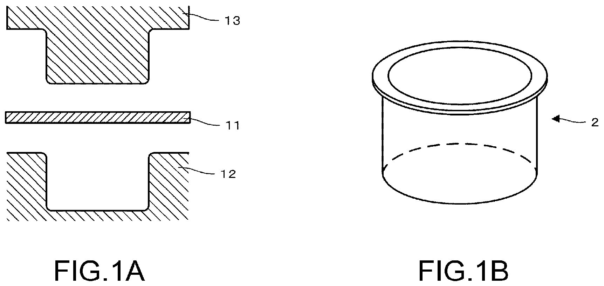

The first embodiment of the present invention will be explained hereinbelow with reference to the drawings. FIGs. 1A and 1B illustrate the method for manufacturing a cup-shaped tubular body. FIG. 1A is a vertical sectional view illustrating a step of molding a cup-shaped tubular body by deep drawing; FIG. 1B is a perspective view illustrating the molded cup-shaped tubular body. As depicted in FIG. 1A, a thin metal sheet 11, e.g. of SUS304, is deep drawn with a female mold 12 and a punch 13 to mold the cup-shaped tubular body 2 depicted in FIG. 1B.

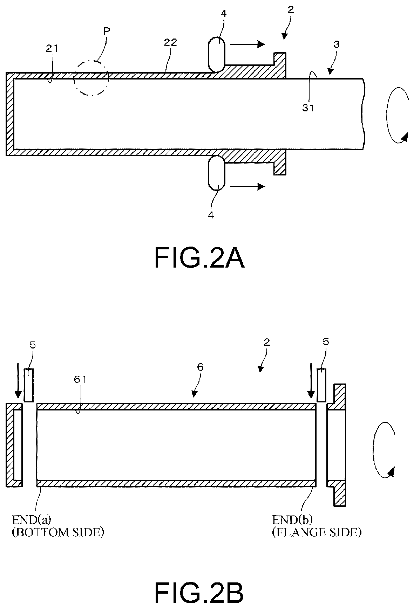

FIGs. 2A and 2B illustrate steps performed after the step illustrated by FIGs. 1A and 1B. FIG. 2A is an explanatory drawing illustrating a step of performing a spinning process to the cup-shaped tubular body 2 depicted in FIG. 1B by using a mandrel according to the first embodiment of the present invention. FIG. 2B is an explanatory drawing illustrating a step of molding a tubular fixing sleeve by cutting out both ends of the cup-shaped tubular body after the spinning process. Thus, as depicted in FIG. 2A, a mandrel 3 of a spinning machine is fitted on an inner circumferential surface 21 of the cup-shaped tubular body 2, and the mandrel 3 is rotated to rotate the cup-shaped tubular body 2. The spinning process is performed by pressing rollers 4 against an outer circumferential surface 22 of the cup-shaped tubular body 2 and moving the rollers 4, in the axial direction of the cup-shaped tubular body 2. The cup-shaped tubular body 2 is plastically deformed in the axial direction of the cup-shaped tubular body 2, reduced in wall thickness, and elongated in the axial direction. As depicted in FIG. 2B, where both ends of the cup-shaped tubular body 2 subjected to the spinning process are cut with parting bytes 5, a tubular fixing sleeve 6 is obtained.

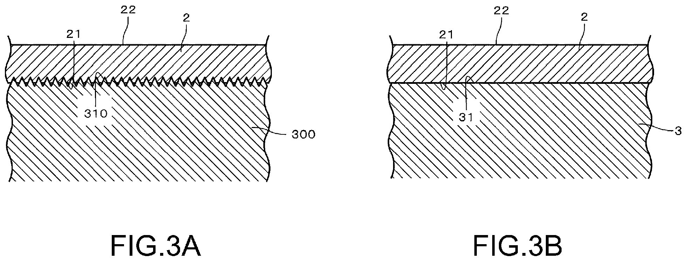

FIGs. 3A and 3B show the enlarged cross-sectional view of the P portion in FIG. 2A; FIG. 3A shows the enlarged cross-sectional view of the P portion illustrating the spinning process performed with a conventional mandrel 300. FIG. 3B shows the enlarged cross-sectional view of the P portion illustrating the spinning process performed with the mandrel 3 of the first embodiment of the present invention. In order to prevent burn-in during the spinning process, a high-viscosity lubricating oil with a viscosity of 1900 mm²/s (40°C) has been conventionally used. Therefore, as depicted in FIG. 3A, fine protrusions and depressions for retaining the lubricating oil have been formed on an outer circumferential surface 310 of the conventional mandrel 300. For this reason, fine protrusions and depressions of the outer circumferential surface 310 of the mandrel 300 have been transferred to the inner circumferential surface 21 of the cup-shaped tubular body 2, and the inner circumferential surface 21 of the cup-shaped tubular body 2 seems matted to the naked eye.

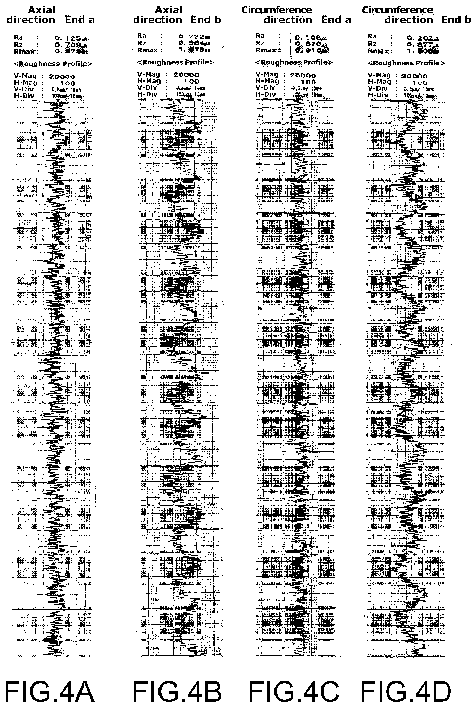

FIGs. 4A-4D show data obtained by measuring the surface roughness of an inner circumferential surface 61 of the fixing sleeve 6 processed by spinning process with the conventional mandrel 300. Thus, FIG. 4A shows data obtained by measuring the axial surface roughness of the end (a) (left end of the fixing sleeve 6; referred to as a bottom side) in FIG. 2B. FIG. 4B shows data obtained by measuring the axial surface roughness of the end (b) (right end of the fixing sleeve 6; referred to as a flange side) in FIG. 2B. FIG. 4C shows data obtained by measuring the circumferential surface roughness of the end (a) in FIG. 2B. FIG. 4D shows data obtained by measuring the circumferential surface roughness of the end (b) in FIG. 2B. As depicted in FIGs. 4A-4D, on the inner circumferential surface 61 of the fixing sleeve 6 processed by spinning process with the conventional mandrel 300, the center line average roughness (Ra) is 0.108 µm to 0.222 µm, the ten-point average height (Rz) is 0.670 µm to 0.964 µm, the maximum height (Rmax) is 0.910 µm to 1.679 µm, and a large number of fine protrusions and depressions have been formed.

As depicted in FIG. 3B, as a result of using a lubricating oil with a viscosity of 4.1 mm²/s (40°C) which is lower than that in the prior art, the outer circumferential surface 31 of the mandrel 3 of the first embodiment of the present invention is a smooth surface with a small surface roughness. Therefore, the smooth surface of the outer circumferential surface 31 of the mandrel 3 is transferred to the inner circumferential surface 21 of the cup-shaped tubular body 2, fine depressions and protrusions are eliminated from the inner circumferential surface 21 of the cup-shaped tubular body 2, and the inner circumferential surface 21 of the cup-shaped tubular body 2 becomes mirror finished to the naked eye.

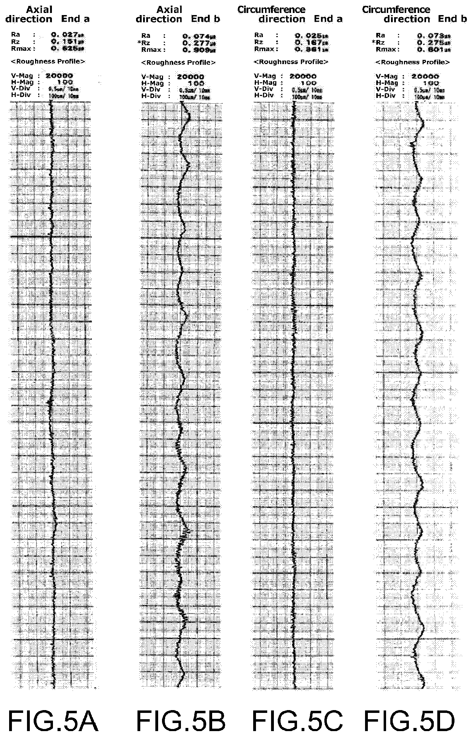

FIGs. 5A-5D show data obtained by measuring the surface roughness of the inner circumferential surface 61 of the fixing sleeve 6 processed by spinning process with the mandrel 3 of the first embodiment of the present invention. Thus, FIG. 5A shows data obtained by measuring the axial surface roughness of the end (a) in FIG. 2B. FIG. 5B shows data obtained by measuring the axial surface roughness of the end (b) in FIG. 2B. FIG. 5C shows data obtained by measuring the circumferential surface roughness of the end (a) in FIG. 2B. FIG. 5D shows data obtained by measuring the circumferential surface roughness of the end (b) in FIG. 2B. As depicted in FIGs. 5A-5D, on the inner circumferential surface 61 of the fixing sleeve 6 processed by the spinning process with the mandrel 3 according to the first embodiment, the center line average roughness (Ra) is 0.025 µm to 0.074 µm, the ten-point average height (Rz) is 0.151 µm to 0.277 µm, and the maximum height (Rmax) is 0.361 µm to 0.909 µm. Thus the center line average roughness (Ra) and ten-point average height (Rz) are about four times less and the maximum height (Rmax) is about two times less than those of the prior art, and fine protrusions and depressions are eliminated.

### [Second embodiment of the method for manufacturing a fixing sleeve]

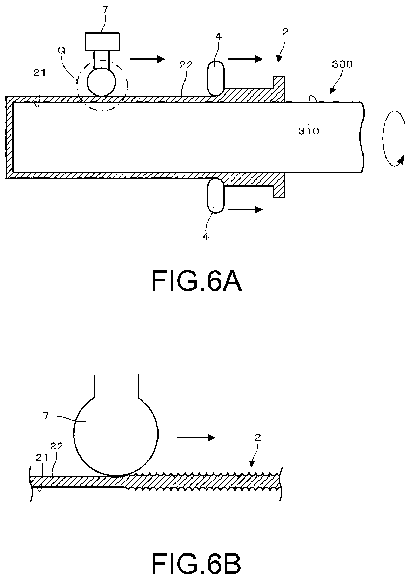

FIGs. 6A and 6B illustrate the method for manufacturing a fixing sleeve according to a preferred embodiment of the present invention. FIG. 6A is an explanatory drawing illustrating a step of removing the roller marks simultaneously with the spinning process. FIG. 6B is an enlarged cross-sectional view of the Q portion depicted in FIG. 6A. As depicted in FIG. 6A, at the same time as the spinning process is performed by moving the rollers 4 in the axial direction of the cup-shaped tubular body 2, a burnishing tool (spherical tool) 7 is pressed against the outer circumferential surface 22 of the cup-shaped tubular body 2 after the spinning process, and the burnishing tool 7 is moved in the same direction as the movement direction of the rollers 4. The cup-shaped tubular body 2 is plastically deformed in the axial direction of the cup-shaped tubular body 2, reduced in wall thickness, and elongated in the axial direction.

Then, where both ends of the cup-shaped tubular body 2 subjected to the roller mark removal process are cut with the parting bytes 5 in the same manner as depicted in FIG. 2B illustrating the first embodiment, a tubular fixing sleeve 6 is obtained. In the preferred embodiment, the conventional mandrel is used as the mandrel 300 to be fitted on the inner circumferential surface 21 of the cup-shaped tubular body 2. As depicted in FIG. 6B, the burnishing tool 7 crushes the roller marks created in the spinning process, removes the roller marks, and flattens the surface.

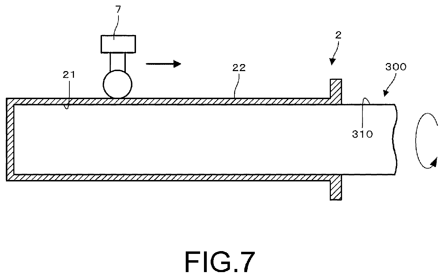

FIG. 7 is an explanatory drawing illustrating a variation example of a method for manufacturing a fixing sleeve, not belonging to the present invention, the drawing depicting a step of removing the roller marks separately from the spinning process. As depicted in FIG. 7, the burnishing tool (spherical tool) 7 is pressed against the outer circumferential surface 22 of the cup-shaped tubular body 2 which has been reduced in wall thickness and elongated in the axial direction by the spinning process, and the burnishing tool 7 is moved in the axial direction of the cup-shaped tubular body 2 to collapse the roller marks formed during the spinning process. Where both ends of the cup-shaped tubular body 2 subjected to the roller mark removal process are cut with the parting bytes 5 in the same manner as depicted in FIG. 2B illustrating the first embodiment, the tubular fixing sleeve 6 is obtained.

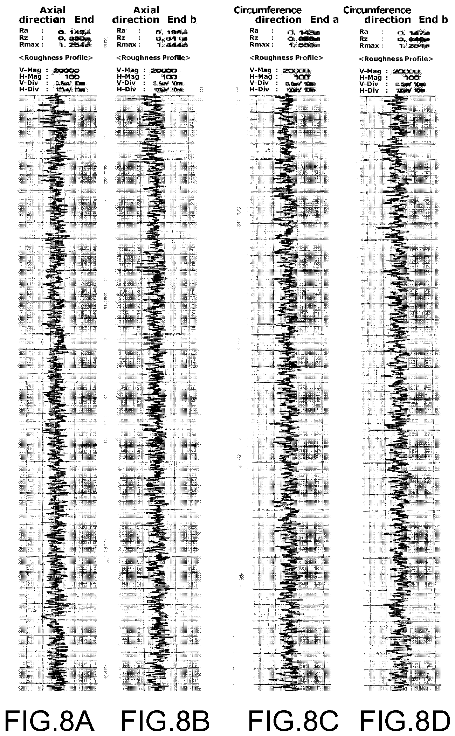

FIGs. 8A-8D illustrate data obtained by measuring the surface roughness of the inner circumferential surface 61 of the fixing sleeve 6 subjected to the roller mark removal process. Thus, FIG. 8A shows data obtained by measuring the axial surface roughness of the end (a) in FIG. 2B. FIG. 8B shows data obtained by measuring the axial surface roughness of the end (b) in FIG. 2B. FIG. 8C shows data obtained by measuring the circumferential surface roughness of the end (a) in FIG. 2B. FIG. 8D shows data obtained by measuring the circumferential surface roughness of the end (b) in FIG. 2B. As depicted in FIGs. 8A-8D, on the inner circumferential surface 61 of the fixing sleeve 6 subjected to the roller mark removal process according to the second embodiment, the center line average roughness (Ra) is 0.136 µm to 0.147 µm, the ten-point average height (Rz) is 0.830 µm to 0.853 µm, and the maximum height (Rmax) is 1.254 µm to 1.509 µm. Thus, large depressions and protrusions (roller marks) are removed, as compared with the prior art. Further, the center line average roughness (Ra), ten-point average height (Rz), and maximum height (Rmax) are substantially the same, and a large number of fine protrusions and depressions remain. In addition, the center line average roughness (Ra) and ten-point average height (Rz) in the axial direction and circumferential direction are substantially the same. Since a large number of fine protrusions and depressions remain, the lubricating oil can be retained at the inner circumferential surface 61 of the fixing sleeve 6.

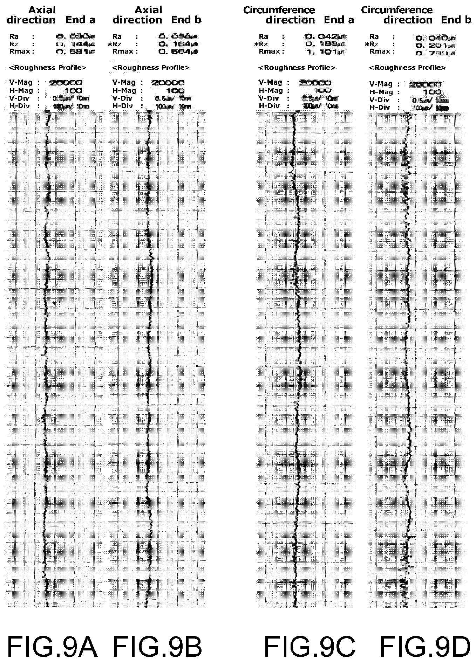

FIGs. 9A-9D illustrate data obtained by measuring the surface roughness of the inner circumferential surface of the fixing sleeve when the spinning process with the mandrel according to the first embodiment of the present invention was combined with the roller mark removal process. Thus, in the configuration depicted in FIG. 6A, the mandrel 300 was replaced with the mandrel 3 of the first embodiment, the spinning process was performed by moving the rollers 4 in the axial direction of the cup-shaped tubular body 2, at the same time the burnishing tool 7 was pressed against the outer circumferential surface 22 of the cup-shaped tubular body 2 subjected to the spinning process, and the processing was performed by moving the burnishing tool 7 in the same direction as the movement direction of the rollers 4.

Thus, FIG. 9A shows data obtained by measuring the axial surface roughness of the end (a) in FIG. 2B. FIG. 9B shows data obtained by measuring the axial surface roughness of the end (b) in FIG. 2B. FIG. 9C shows data obtained by measuring the circumferential surface roughness of the end (a) in FIG. 2B. FIG. 9D shows data obtained by measuring the circumferential surface roughness of the end (b) in FIG. 2B. As depicted in FIGs. 9A-9D, on the inner circumferential surface 61 of the fixing sleeve 6 subjected to the spinning process according to the first embodiment in combination with the roller mark removal process, the center line average roughness (Ra) is 0.030 µm to 0.042 µm, the ten-point average height (Rz) is 0.144 µm to 0.201 µm, and the maximum height (Rmax) is 0.531 µm to 1.101 µm. Thus, the center line average roughness (Ra) and ten-point average height (Rz) are about four times less and the maximum height (Rmax) is about two times less than those of the prior art, and fine protrusions and depressions (roller marks) are eliminated.

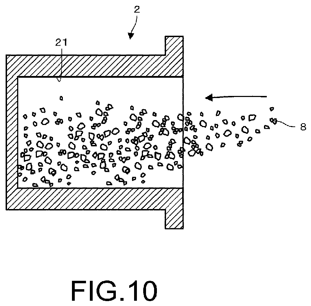

FIG. 10 is an explanatory drawing illustrating a method for manufacturing a fixing sleeve, not belonging to the present invention, the drawing depicting a step of sandblasting the inner circumferential surface of the cup-shaped tubular body molded by deep drawing. As depicted in FIG. 10, particles or abrasive grains 8 of alumina, etc., are blown onto the inner circumferential surface 21 of the cup-shaped tubular body 2, and the inner circumferential surface 21 is uniformly satin finished. Mechanical polishing or chemical polishing may be performed instead of sandblasting. Then, the spinning process is performed with respect to the cup-shaped tubular body 2 subjected to sandblasting. The conventional mandrel was used for fitting on the inner circumferential surface 21 of the cup-shaped tubular body 2.

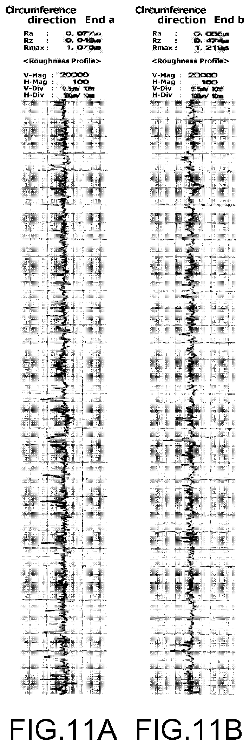

FIGs. 11A and 11B illustrate data obtained by measuring the surface roughness of the inner circumferential surface 61 of the fixing sleeve 6 processed by spinning process with the conventional mandrel after performing the sandblasting. Thus, FIG. 11A shows data obtained by measuring the circumferential surface roughness of the end (a) in FIG. 2B. FIG. 11B shows data obtained by measuring the circumferential surface roughness of the end (b) in FIG. 2B. As depicted in FIGs. 11A and 11B, on the inner circumferential surface 61 of the fixing sleeve 6 processed by spinning process with the conventional mandrel after performing the sandblasting according to the third embodiment, the center line average roughness (Ra) is 0.058 µm to 0.077 µm, the ten-point average height (Rz) is 0.474 µm to 0.640 µm, and the maximum height (Rmax) is 1.078 µm to 1.219 µm.

As compared with the prior art method, large depressions and protrusions (roller marks) are removed, the center line average roughness (Ra) and ten-point average height (Rz) are reduced by a factor of about two, the maximum height (Rmax) is about the same. and a large number of fine protrusions and depressions remain. Since a large number of fine protrusions and depressions remain, the lubricating oil can be retained at the inner circumferential surface 61 of the fixing sleeve 6. Where the sandblasting is used together with the roller mark removal process, large depressions and protrusions (roller marks) can be removed, fine depressions and protrusions remain, and the lubricating oil can be retained at the inner circumferential surface 61 of the fixing sleeve 6.

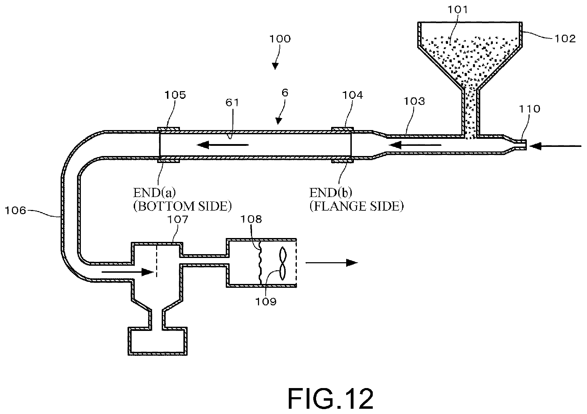

FIG. 12 is an explanatory drawing illustrating an inner surface polishing device 100 of a negative-pressure suction type, this figure illustrating the method for manufacturing a fixing sleeve according to a preferred embodiment of the present invention. The inner surface polishing device 100 polishes the inner circumferential surface 61 of the fixing sleeve 6. Thus, the inner circumferential surface 61 of the fixing sleeve 6 is polished after spinning with the conventional mandrel 300 (see FIG. 3A). The fixing sleeve 6 depicted in FIG. 12 is the tubular fixing sleeve 6. The fixing sleeve 6 is molded into the tubular shape by cutting both ends of the cup-shaped tubular body 2 subjected to the spinning process with the parting bytes 5, as depicted in the above-described FIG. 2B. As depicted in FIG. 12, the inner surface polishing device 100 is constituted by a hopper tank 102 storing a polishing material 101, a polishing material conveying pipe 103, fixing sleeve mounting sections 104, 105, an air suction pipe 106, a cyclone separator 107, a filter 108, and a suction blower 109. After the fixing sleeve 6 is connected between the fixing sleeve mounting sections 104, 105, the abrasive material 101 is sucked in by the suction blower 109 in a suitable amount from the hopper tank 102, while falling down therefrom.

An air supply pipe 110 is provided at the suction side (right side in FIG. 12) of the polishing material conveying pipe 103. The polishing material 101 is jetted together with the secondary air sucked in from the air supply pipe 110 into the polishing material conveying pipe 103 and to the inner circumferential surface 61 of the fixing sleeve 6. When the polishing material 101 passes through the inner circumferential surface 61, depressions and protrusions present on the inner circumferential surface 61 of the fixing sleeve 6 are removed and the inner circumferential surface 61 is polished. The removed depressions and protrusions and the polishing material 101 are recovered by the cyclone separator 107. The polishing material 101 is jetted from the end (b) (flange-side end) towards the end (a) (bottom-side end) of the fixing sleeve 6. The secondary air which has passed through the cyclone separator 107 is purified by a filter 108 and released to the outside from the suction blower 109. In the inner surface polishing device 100 of a negative pressure suction type, a negative pressure is uniformly applied over the entire length, in the axial direction, of the inner circumferential surface 61 of the fixing sleeve 6. Therefore, the inner circumferential surface 61 of the fixing sleeve 6 can be uniformly polished from the inlet to the outlet.

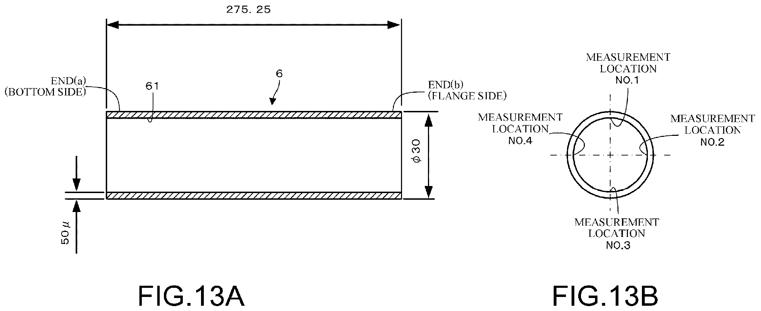

FIGs. 13A and 13B are explanatory drawings illustrating the locations for measuring the surface roughness of the inner circumferential surface 61 of the fixing sleeve 6 polished with the inner surface polishing device 100 depicted in FIG. 12. FIG. 13A is a vertical sectional view of the fixing sleeve 6, and FIG. 13B is a right-side view of the fixing sleeve depicted in FIG. 13A. As depicted in FIGs. 13A and 13B, the inner circumferential surface 61 of the fixing sleeve (diameter 30 mm, wall thickness 50 µm, length in the axial direction 275.25 mm) 6 is divided into four equal 90° segments, and the measurement locations are referred to as NO. 1 to NO. 4 in the clockwise order. The surface roughness at both ends (end (a) on the bottom side and end (b) on the flange side) in the axial direction at each of measurement locations NO. 1 to NO. 4 are measured. The left end in FIG. 13A is end (a) (bottom side) and the right end is end (b) (flange side). Thus, the surface roughness was measured in a total of (measurement locations NO. 1 to NO. 4) × (end (a) + end (b)) = 8 locations for one fixing sleeve 6.

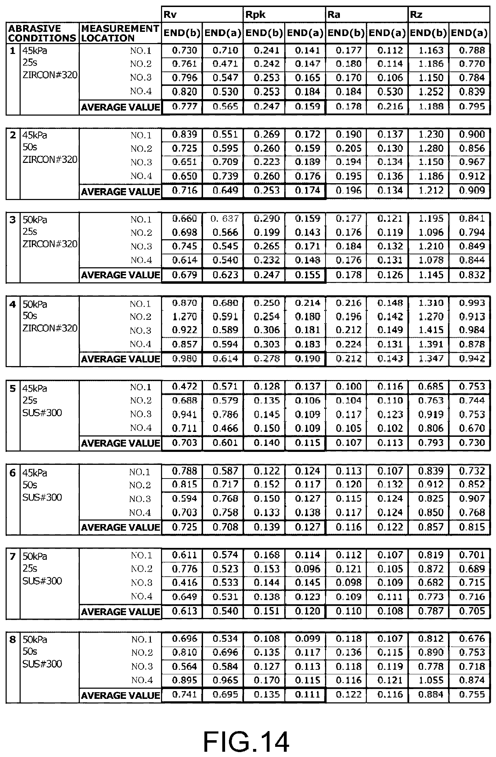

FIG. 14 is a table obtained by measuring the surface roughness, in the axial direction, of the inner circumferential surface 61 of the fixing sleeve 6 subjected to the inner surface polishing. Thus, the surface roughness in (measurement locations NO. 1 to NO. 4) × (2 locations: end (a) + end (b)) was measured for each single fixing sleeve 6 under eight Abrasive Conditions 1 to 8. The average value is the average of the values obtained for the measurement locations NO. 1 to NO. 4. Four types of surface roughness, namely, the maximum valley depth (Rv), initial wear height (Rpk), center line average roughness (Ra), and ten-point average roughness (Rz) are shown in FIG. 14. As for the Abrasive Conditions 1 to 8, the measurements were performed by changing the combination of negative pressure [-KPa] representing the suction power of the suction blower 109, inner surface polishing time [S], and polishing material. Two types, 45 KPa and 50 KPa, of the negative pressure [-KPa] were used. Two types, 25S and 50S, of the inner surface polishing time (sec [S]) were used. Two types, zircon #320 and SUS #300, of the polishing material were used.

In the method for manufacturing a fixing sleeve according to a preferred embodiment of the present invention, the numerical values of two types, namely, the maximum valley depth (Rv) and initial wear height (Rpk), are used to evaluate the abrasive conditions ensuring the adequate value of the surface roughness of the inner circumferential surface 61 of the fixing sleeve 6. The maximum valley roughness is a numerical value representing the maximum value of the valley depth (Zv) at the contour curve in a reference length. The initial wear height (Rpk) is a numerical value determined from the intersection point of the ordinate and the extension line of the flat section of the load curve, and this numerical value serves to determine the point of change from the point contact to surface contact when the load length ratio (tp) gradually increases due to wear.

The load length ratio (tp) is represented by a percentage of the reference length and the sum of the cutting lengths (load lengths) obtained when the roughness curve extracted based on the reference length is cut at a cutting level parallel to the peak. The load curve is a graph in which the load length ratio (tp) is plotted against the abscissa, and the direction of the height (cutting height) of the roughness curve is plotted against the ordinate. The values of the load length ratio (tp) at each cutting level are plotted. Thus, in order to reduce the wear amount of the surface which is in contact with the heater, it is preferred that the numerical value of the initial wear height (Rpk) of the inner circumferential surface 61 of the fixing sleeve 6 be small. Further, in order to increase the grease retention capacity of the surface that is in contact with the heater, it is preferred that the numerical value of the maximum valley depth (Rv) of the inner circumferential surface 61 of the fixing sleeve 6 be large.

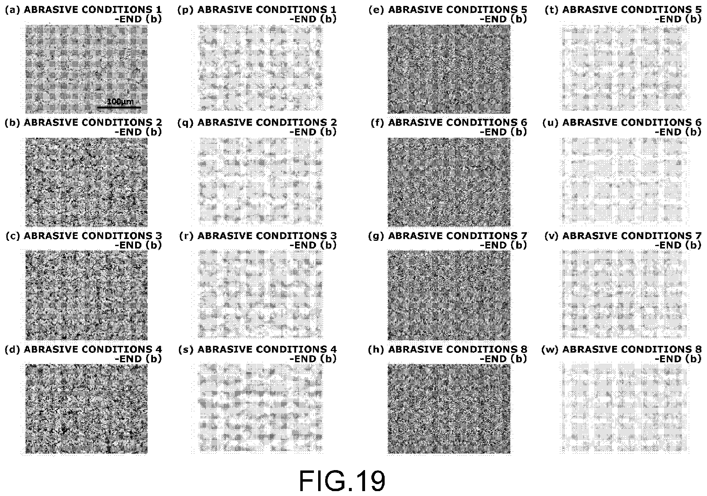

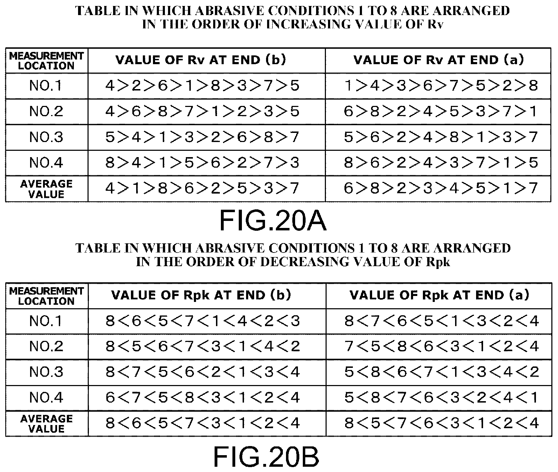

FIG. 19 is a microphotograph of the metal surface obtained by polishing the end (b) under the Abrasive Condition 1 to Abrasive Condition 8 depicted in FIG. 14. Here, FIG. 19 (a) to FIG. 19 (h) are eight microphotographs (the original color is violet) are the usual microphotographs presented for reference. FIG. 19 (p) to FIG. 19 (w) are eight microphotographs (the original color is yellow) illustrate the height (depth) of protrusions and depressions of the contour curve, light gray portions represent low portions, and dark gray portions represent high portions. FIG. 20A is a table in which the Abrasive Conditions 1 to 8 shown in the table in FIG. 14 are arranged in the order of increasing value Rv, and FIG. 20B is a table in which the Abrasive Conditions 1 to 8 shown in the table in FIG. 14 are arranged in the order of decreasing value of the initial wear height (Rpk).

As depicted in FIG. 20B, where both the average value for the end (b) and the average value for the end (a) are considered, the abrasive condition at which the numerical value of the initial wear height (Rpk) is the smallest is Abrasive Condition 8. Further, as depicted in FIG. 20A, where both the average value for the end (b) and the average value for the end (a) are considered, the abrasive conditions at which the numerical value of the maximum valley depth (Rv) is the largest are the Abrasive Condition 4 and Abrasive Condition 6. Further, under the Abrasive Condition 8, the numerical value of the maximum valley depth (Rv) at the end (b) is the third largest and the numerical value of the maximum valley depth (Rv) at the end (a) is the second largest. As a result, the Abrasive Condition 8 can be evaluated as the abrasive condition at which the numerical value of the initial wear height (Rpk) is small and the numerical value of the maximum valley depth (Rv) is large. By viewing the microphotographs in FIG. 19, it is possible to compare the yellow microphotograph obtained under the Abrasive Condition 8 at which the numerical value of the initial wear height (Rpk) is small with the yellow microphotograph obtained under the Abrasive Condition 4 at which the numerical value of the initial wear height (Rpk) is large. As a result, it can be found that in the yellow (the original color) microphotograph obtained under the Abrasive Condition 8, the surface area of the green (in the original color yellow) low portions and red (in the original color yellow) height portions is less than that of the respective portions in the yellow (the original color) microphotograph obtained under the Abrasive Condition 4.

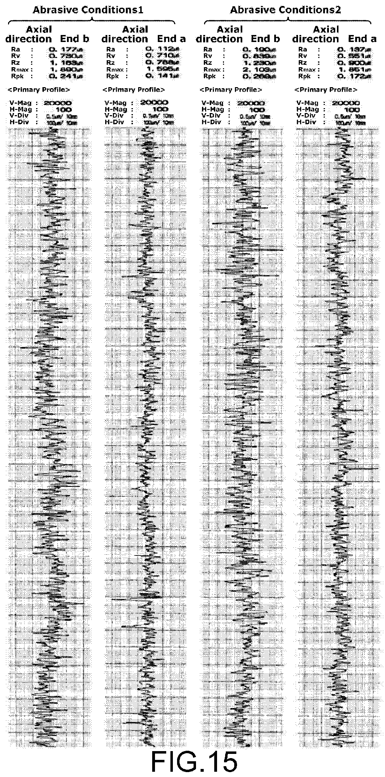

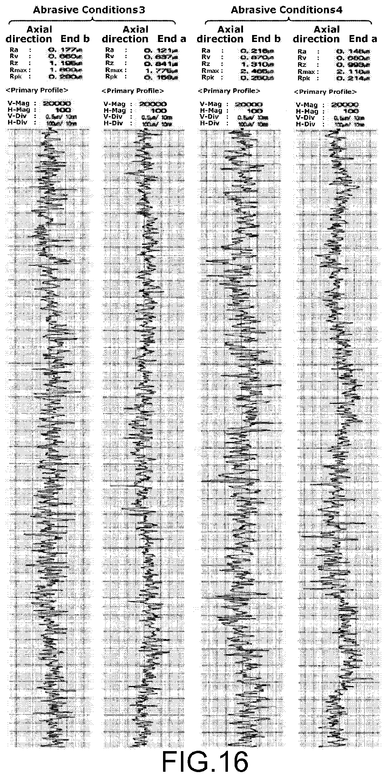

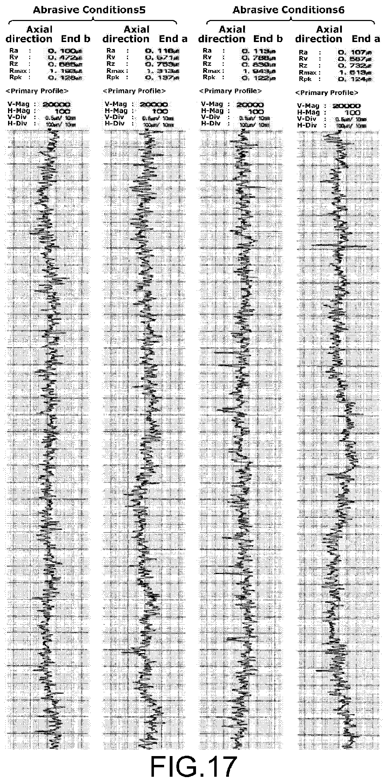

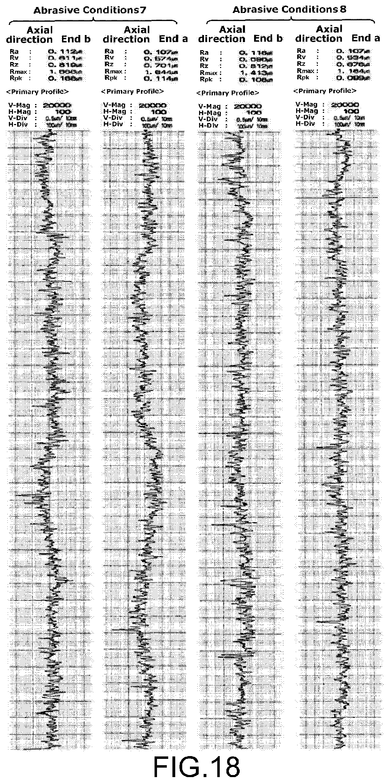

FIGS. 15 to 18 show data obtained by measuring the surface roughness under the Abrasive Conditions 1 to 8. Thus, data obtained under the Abrasive Condition 8 at which the numerical value of the initial wear height (Rpk) is small are compared with data obtained under the Abrasive Condition 4 at which the numerical value of the initial wear height (Rpk) is large. As a result, it can be found that the depressions and protrusions at the contour curve obtained under the Abrasive Condition 8 which are shown in FIG. 18 are clearly less than those at the contour curve obtained under the Abrasive Condition 4 which are shown in FIG. 16.

## Claims

1. A method for manufacturing a fixing sleeve (6), comprising:
performing a spinning process by fitting a mandrel (3) on an inner circumferential surface (21) of a cup-shaped tubular body (2) which is made of metal and pressing a roller or rollers (4) against an outer circumferential surface (22) of the cup-shaped tubular body (2), thereby elongating the cup-shaped tubular body (2) in an axial direction and reducing a wall thickness of the cup-shaped tubular body (2);
cutting out both ends of the cup-shaped tubular body (2) after the spinning process to form a fixing sleeve (6) of a tubular shape; and
performing a polishing process on the inner circumferential surface (61) of the fixing sleeve (6) into a smooth surface,
**characterized in that** the polishing process comprises:
connecting one end of the fixing sleeve (6) to a polishing material conveying pipe (103), via a fixing sleeve mounting section (104), into which an abrasive material is supplied and the other end of the fixing sleeve (6) to an air suction pipe (106) via another fixing sleeve mounting section (105), and
performing a suction from a side of the air suction pipe (106) so as to cause the polishing material to be jetted along with an air from a side of the polishing material conveying pipe (103) and to flow through the inner circumferential surface of the fixing sleeve (6) over an entire axial length of the fixing sleeve (6), due to which an entire inner circumferential surface of the fixing sleeve (6) is uniformly polished to obtain a smooth surface;
a roller mark formed during the spinning process is removed by pressing a burnishing tool (7) against the outer circumferential surface (22) of the cup-shaped tubular body (2) at the same time as pressing the roller or rollers (4) against the outer circumferential surface (22) of the cup-shaped tubular body (2); and
the burnishing tool (7) moves in the axial direction of the cup-shaped tubular body (2).

2. The method for manufacturing a fixing sleeve (6) according to claim 1, wherein a surface roughness of the inner circumferential surface (61) of the fixing sleeve (6) is evaluated by two numerical values, namely, a maximum valley depth and an initial wear height.

## Patentansprüche

1. Verfahren zur Herstellung einer Fixierhülle (6), umfassend:
Durchführen eines Spinnprozesses durch Anbringen eines Drehstifts (3) auf eine innere Umfangsfläche (21) eines becherförmigen rohrförmigen Körpers (2), der aus Metall gebildet ist, und Pressen einer Walze oder Walzen (4) gegen eine äußere Umfangsfläche (22) des becherförmigen rohrförmigen Körpers (2), wodurch der becherförmige rohrförmige Körper (2) in einer axialen Richtung verlängert wird und eine Wanddicke des becherförmigen rohrförmigen Körpers (2) reduziert wird;
Ausschneiden beider Enden des becherförmigen röhrenförmigen Körpers (2) nach dem Spinnprozess, um eine rohrförmige Fixierhülle (6) zu bilden; und
Durchführen eines Polierprozesses an der inneren Umfangsfläche (61) der Fixierhülle (6) zu einer glatten Fläche,
**dadurch gekennzeichnet, dass** der Polierprozess umfasst:
Verbinden eines Endes der Fixierhülle (6) über einen Fixierhüllen-Montageabschnitt (104) mit einem Poliermaterial-Förderrohr (103), in das ein Schleifmaterial zugeführt wird, und des anderen Endes der Fixierhülle (6) über einen anderen Fixierhüllen-Montageabschnitt (105) mit einem Luftansaugrohr (106), und
Durchführen von Ansaugen von einer Seite des Luftansaugrohrs (106), um zu bewirken, dass das Poliermaterial zusammen mit einer Luft von einer Seite des Poliermaterial-Förderrohrs (103) ausgestoßen wird und durch die innere Umfangsfläche der Fixierhülle (6) über eine gesamte axiale Länge der Fixierhülle (6) fließt, wodurch eine gesamte innere Umfangsfläche der Fixierhülle (6) gleichmäßig poliert wird, um eine glatte Fläche zu erhalten;
eine Walzenspur, gebildet während des Spinnprozesses durch Pressen eines Glättwerkzeugs (7) gegen die äußere Umfangsfläche (22) des becherförmigen rohrförmigen Körpers (2) zur gleichen Zeit wie das Pressen der Walze oder Walzen (4) gegen die äußere Umfangsfläche (22) des becherförmigen rohrförmigen Körpers (2) entfernt wird; und
das Glättwerkzeug (7) sich in der axialen Richtung des becherförmigen rohrförmigen Körpers (2) bewegt.

2. Verfahren zur Herstellung einer Fixierhülle (6) gemäß Anspruch 1, wobei eine Flächenrauheit der inneren Umfangsfläche (61) der Fixierhülle (6) durch zwei Zahlenwerte, nämlich eine maximale Kehltiefe und eine anfängliche Verschleißhöhe, bewertet wird.

## Revendications

1. Procédé de fabrication d'un manchon de fixation (6), comprenant de :
effectuer un processus de filature en ajustant un mandrin (3) sur une surface circonférentielle intérieure (21) d'un corps tubulaire en forme de coupelle (2) qui est constitué de métal et en pressant un rouleau ou des rouleaux (4) contre une surface circonférentielle extérieure (22) du corps tubulaire en forme de coupe (2), en allongeant ainsi le corps tubulaire en forme de coupelle (2) dans une direction axiale et en réduisant une épaisseur de paroi du corps tubulaire en forme de coupelle (2) ;
découper les deux extrémités du corps tubulaire en forme de coupelle (2) après le processus de filage pour former un manchon de fixation (6) de forme tubulaire ; et
effectuer un processus de polissage sur la surface circonférentielle intérieure (61) du manchon de fixation (6) en une surface lisse, **caractérisé en ce que** le processus de polissage comprend de :
raccorder une extrémité du manchon de fixation (6) à un tuyau de transport de matériau de polissage (103), via une section de montage de manchon de fixation (104), dans laquelle un matériau abrasif est fourni et l'autre extrémité du manchon de fixation (6) à un tuyau d'aspiration d'air (106) via une autre section de montage de manchon de fixation (105), et en effectuant un aspiration à partir d'un côté du tuyau d'aspiration d'air (106) de manière à provoquer le jet du matériau de polissage avec un air provenant d'un côté du tuyau de transport de matériau de polissage (103) et pour s'écouler à travers la surface circonférentielle intérieure du manchon de fixation (6) sur toute une longueur axiale du manchon de fixation (6), moyennant quoi une surface circonférentielle intérieure entière du manchon de fixation (6) est uniformément polie pour obtenir une surface lisse;
une marque de rouleau formée pendant le processus de filature est supprimée en pressant un outil de brunissage (7) contre la surface circonférentielle externe (22) du corps tubulaire en forme de coupelle (2) tout en pressant simultanément le rouleau ou les rouleaux (4) contre la surface circonférentielle extérieure (22) du corps tubulaire en forme de coupelle (2); et
l'outil de brunissage (7) se déplace dans la direction axiale du corps tubulaire en forme de coupelle (2).

2. Procédé de fabrication d'un manchon de fixation (6) selon la revendication 1, dans lequel une rugosité de surface de la surface circonférentielle intérieure (61) du manchon de fixation (6) est évaluée par deux valeurs numériques, à savoir, une profondeur de vallée maximale et une hauteur d'usure initiale.
